# FASCICULE DE BREVET EUROPEEN

(11) **EP 3 080 523 B1**
(45) Date de publication et mention de la délivrance du brevet: **10.01.2018**
(21) Numéro de dépôt: 14808925.3
(22) Date de dépôt: 02.12.2014
(51) Int. Cl.: H05B 3/06, H05B 3/42, H05B 3/46, F24H 1/00, F24H 1/10, F24H 1/12, F24H 9/00, F24H 9/18, B60H 1/22

(54) **DISPOSITIF ÉLECTRIQUE DE CONDITIONNEMENT THERMIQUE DE FLUIDE POUR VÉHICULE AUTOMOBILE, ET APPAREIL DE CHAUFFAGE ET/OU DE CLIMATISATION ASSOCIÉ**
ELEKTRISCHE VORRICHTUNG ZUR THERMISCHEN KONDITIONIERUNG DER FLÜSSIGKEIT FÜR EIN KRAFTFAHRZEUG UND ENTSPRECHENDE HEIZ- UND/ODER LÜFTUNGSVORRICHTUNG
ELECTRICAL DEVICE FOR THE THERMAL CONDITIONING OF FLUID FOR A MOTOR VEHICLE, AND ASSOCIATED HEATING AND/OR AIR-CONDITIONING APPLIANCE

(30) Priorité: 05.12.2013 FR 1362156
(43) Date de publication de la demande: 19.10.2016
(73) Titulaire: Valeo Systemes Thermiques, 78320 Le Mesnil Saint Denis (FR)
(72) Inventeur: TELLIER, Laurent, F-75116 Paris (FR); LEBORGNE, José, F-78990 Elancourt (FR); PIERRON, Frédéric, F-78120 Rambouillet (FR)
(74) Mandataire: Metz, Gaëlle
(86) Numéro de dépôt international: PCT/EP2014/076173
(87) Numéro de publication internationale: WO 2015/082434

(56) Documents cités:
- EP-A1- 2 611 261
- FR-A1- 2 925 439
- FR-A1- 2 979 693
- US-A1- 2004 028 396

## Description

L'invention concerne un dispositif électrique de conditionnement thermique d'un fluide pour véhicule automobile. Il s'agit notamment d'un dispositif de chauffage électrique. L'invention s'applique plus particulièrement aux appareils de chauffage et/ou de climatisation de véhicules automobiles.

De façon habituelle, le réchauffage de l'air destiné au chauffage de l'habitacle d'un véhicule automobile, ou encore permettant un désembuage ou dégivrage, est assuré par le passage d'un flux d'air à travers un échangeur thermique, plus précisément par un échange thermique entre le flux d'air et un fluide. Il s'agit généralement du fluide de refroidissement dans le cas d'un moteur thermique.

Toutefois, ce mode de chauffage peut s'avérer inadapté ou insuffisant pour garantir un chauffage rapide et efficace de l'habitacle du véhicule, en particulier pour assurer un réchauffement de l'habitacle ou dégivrage ou désembuage avant utilisation du véhicule en environnement très froid ou encore lorsqu'une montée très rapide de la température est souhaitée.

Par ailleurs, dans le cas d'un véhicule électrique, la fonction de chauffage n'est plus réalisée par la circulation du liquide de refroidissement dans l'échangeur thermique. On peut prévoir un circuit d'eau pour le chauffage de l'habitacle. Cependant, ce mode de chauffage peut aussi s'avérer inadapté ou insuffisant pour garantir un chauffage rapide et efficace de l'habitacle du véhicule.

Par ailleurs, afin de réduire l'encombrement et le coût du fait du circuit d'eau supplémentaire, il est également connu d'utiliser pour le véhicule électrique, une boucle de climatisation fonctionnant en mode de pompe à chaleur. Ainsi, la boucle de climatisation permettant classiquement de refroidir un flux d'air à l'aide d'un fluide réfrigérant, est dans ce cas utilisée de façon à réchauffer le flux d'air. Il convient pour ce faire d'utiliser un évaporateur de la boucle de climatisation comme un condenseur.

Toutefois, ce mode de chauffage aussi peut s'avérer inadapté ou insuffisant. En effet, les performances de la boucle de climatisation en mode de pompe à chaleur dépendent des conditions climatiques extérieures. Par exemple, lorsque l'air extérieur présente une température trop basse cet air ne peut pas être utilisé comme source d'énergie thermique.

Pour pallier ces inconvénients de l'art antérieur, une solution connue consiste à adjoindre à l'échangeur thermique ou au circuit d'eau ou encore à la boucle de climatisation, un dispositif électrique additionnel de conditionnement thermique du fluide tel qu'un dispositif électrique de chauffage.

Un tel dispositif de chauffage électrique peut être adapté pour chauffer en amont le fluide, tel que le liquide de refroidissement pour le moteur thermique, ou l'eau pour le circuit d'eau de chauffage de l'habitacle du véhicule électrique ou encore le fluide réfrigérant de la boucle de climatisation.

De façon connue, le dispositif électrique additionnel de conditionnement thermique du fluide comporte un ou plusieurs modules thermiques en contact avec le fluide par exemple à chauffer.

Plus précisément, un module thermique peut comporter un noyau et un élément chauffant réalisé sous la forme d'une enceinte entourant le noyau, afin de définir un espace de circulation du fluide entre le noyau et l'enceinte. L'enceinte, par exemple cylindrique, est donc la source d'énergie thermique.

Selon une solution connue, un élément chauffant présente des moyens électriques de chauffe par exemple, une ou plusieurs résistances chauffantes réalisées par sérigraphie sous forme de pistes résistives sur la surface externe de l'élément chauffant.

Généralement, une circulation axiale du fluide dans l'espace de circulation entre le noyau et l'enceinte cylindrique, diminue le transfert thermique entre l'enceinte et le fluide. Afin d'augmenter le rendement de l'échange thermique entre l'élément chauffant et le fluide circulant entre le noyau et l'enceinte formant élément chauffant, il est donc préférable d'éviter une circulation du fluide parallèle à l'axe de l'élément chauffant sous forme d'enceinte cylindrique.

Une solution connue est de générer un mouvement hélicoïdal du fluide circulant dans l'espace de circulation. On augmente ainsi l'échange thermique entre l'élément chauffant par exemple sous forme d'enceinte cylindrique et le fluide circulant à l'intérieur de cette enceinte cylindrique.

Pour ce faire, il a été proposé que le noyau présente sur sa surface externe une rainure sensiblement hélicoïdale. Cette rainure hélicoïdale permet de forcer le tournoiement du fluide afin d'augmenter le transfert thermique. Toutefois, avec une telle solution il a été constaté un manque d'homogénéité de vitesses à l'entrée de l'espace de circulation du fluide et une perte de charge élevée.

Selon une solution alternative, il est connu notamment du document EP2607120 un dispositif électrique comportant un ou plusieurs modules thermiques dont le noyau est réalisé en céramique et porte un élément chauffant, un tel noyau est agencé à l'intérieur d'une enceinte entourant le noyau, afin de définir un espace de circulation du fluide entre le noyau chauffant et l'enceinte. Une telle technologie utilisant un noyau en céramique est spécifique.

Le document US 2004/0028396 divulgue un dispositif électrique de conditionnement thermique d'un fluide pour véhicule automobile, le dispositif comprenant:
- au moins un module thermique comprenant une enceinte comprenant au moins un premier moyen électrique de chauffe, et
- un noyau agencé à l'intérieur de l'enceinte, de manière à définir un espace de circulation du fluide entre le noyau et l'enceinte, le noyau d'un module thermique comprenant au moins un second moyen électrique de chauffe du fluide, le premier moyen électrique étant réalisé sur une surface externe de l'enceinte hors de l'espace de circulation; le noyau comportant un film protecteur réalisé dans un matériau isolant électrique et conducteur thermique, tel qu'un matériau céramique, les deux moyens électriques pouvant participer ensemble à la chauffe du fluide à chauffer.
Par ailleurs, la réduction de l'encombrement et l'amélioration des performances thermiques sont des problématiques constantes dans l'automobile.

L'invention a objectif de pallier au moins partiellement les inconvénients de l'art antérieur, en proposant un dispositif électrique de conditionnement thermique de fluide permettant de façon simple d'améliorer les performances thermiques avec un encombrement réduit.

À cet effet, l'invention a pour objet un dispositif électrique de conditionnement thermique d'un fluide pour véhicule automobile, ledit dispositif comprenant au moins un module thermique comprenant :
- une enceinte comprenant au moins un premier moyen électrique de chauffe, et
- un noyau agencé à l'intérieur de l'enceinte, de manière à définir un espace de circulation du fluide entre le noyau et l'enceinte,
tel que le noyau d'un module thermique comprend au moins un second moyen électrique de chauffe du fluide, le premier moyen électrique étant réalisé sous forme de pistes résistives sur une surface externe de l'enceinte hors de l'espace de circulation et le second moyen électrique de chauffe comprenant au moins une piste résistive, et dans lequel le noyau comporte un film protecteur disposé sur la piste résistive et réalisé dans un matériau isolant électrique et conducteur thermique, tel qu' un matériau céramique, les deux moyens électriques pouvant participer ensemble ou individuellement à la chauffe du fluide à chauffer. Ceci permet un transfert thermique du second moyen électrique de chauffe vers le fluide apte à circuler dans le circuit de guidage.

Ainsi, avec un tel dispositif de conditionnement thermique, le chauffage du fluide est réalisé à la fois par un transfert thermique du moyen électrique de chauffe sur l'enceinte vers le fluide, et par un transfert thermique du moyen électrique de chauffe prévu sur le noyau immergé dans l'espace de circulation du fluide à chauffer vers le fluide.

Ceci permet d'améliorer le transfert thermique par rapport aux solutions connues présentant uniquement un moyen électrique de chauffe sur les enceintes à l'extérieur de l'espace de circulation du fluide ou présentant uniquement un moyen électrique de chauffe sur le noyau immergé dans l'espace de circulation du fluide à chauffer.

Avec un seul module thermique on obtient un rendement thermique similaire aux solutions de l'art antérieur prévoyant deux modules thermiques avec un seul module thermique présentant un encombrement réduit.

Selon un aspect de l'invention, le noyau comporte un support du second moyen électrique de chauffe réalisé dans un matériau isolant électriquement et conducteur thermique, tel qu'un matériau céramique.

Le film protecteur est par exemple réalisé dans le même matériau que le support du second moyen électrique de chauffe.

Le noyau permet ainsi la mise en oeuvre du second moyen électrique de chauffe dans le circuit du fluide à chauffer en assurant l'isolation électrique par rapport au fluide sans altérer les performances thermiques, car il contribue à la conductivité thermique du second moyen électrique de chauffe porté par le noyau du module thermique vers le fluide à chauffer.

Selon un autre aspect de l'invention, l'enceinte portant le premier moyen électrique de chauffe et le noyau portant le second moyen électrique de chauffe sont aptes à être commandés par un moyen de commande commun, permettant d'obtenir une structure toujours plus compacte.

Selon un mode de réalisation, le noyau présente deux terminaux aptes à être connectés à un moyen de commande associé, et surmoulés dans le matériau du support du noyau correspondant. Il n'est pas nécessaire de prévoir une interface ou un câblage supplémentaire pour la connexion du second moyen électrique de chauffe porté par le noyau au moyen de commande. En effet, le noyau peut être raccordé directement au moyen de commande via les terminaux surmoulés dans le matériau du support, permettant d'amener le courant vers le second moyen électrique de chauffe.

Selon encore un autre aspect de l'invention, ledit dispositif comporte au moins un boîtier d'entrée du fluide et au moins un boîtier de sortie du fluide respectivement en communication fluidique avec l'espace de circulation du fluide, et agencées de façon opposée de part et d'autre du dispositif selon un axe longitudinal. Cet agencement opposé de l'entrée et de la sortie du fluide de part et d'autre du dispositif, selon un axe longitudinal des noyaux, permet une intégration facilitée dans le véhicule automobile.

Lorsque cette direction est du bas vers le haut, par rapport à l'intégration du dispositif dans un véhicule automobile, on réduit ainsi les risques d'apparition de bulles d'air dans l'espace de circulation du fluide pouvant altérer les performances du module thermique.

Selon encore un autre aspect de l'invention, le noyau comprend sur sa surface externe au moins une rainure.

L'invention concerne également un appareil de chauffage et/ou climatisation pour véhicule automobile, caractérisé en ce qu'il comporte un dispositif électrique de conditionnement thermique d'un fluide tel que défini précédemment.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique et simplifiée un dispositif de chauffage électrique de fluide selon un premier mode de réalisation pour véhicule automobile,
- la figure 2 est une vue en perspective éclatée d'un module de chauffe du dispositif de chauffage selon le premier mode de réalisation de la figure 1,
- la figure 3a représente de façon schématique une vue de côté du dispositif de chauffage selon le premier mode de réalisation de la figure 1,
- la figure 3b représente de façon schématique une vue de côté d'un dispositif de chauffage selon un deuxième mode de réalisation, et
- la figure 4 représente de façon schématique une vue de dessus du dispositif de chauffage des figures 1 et 3a.

Sur ces figures, les éléments identiques portent les mêmes références.

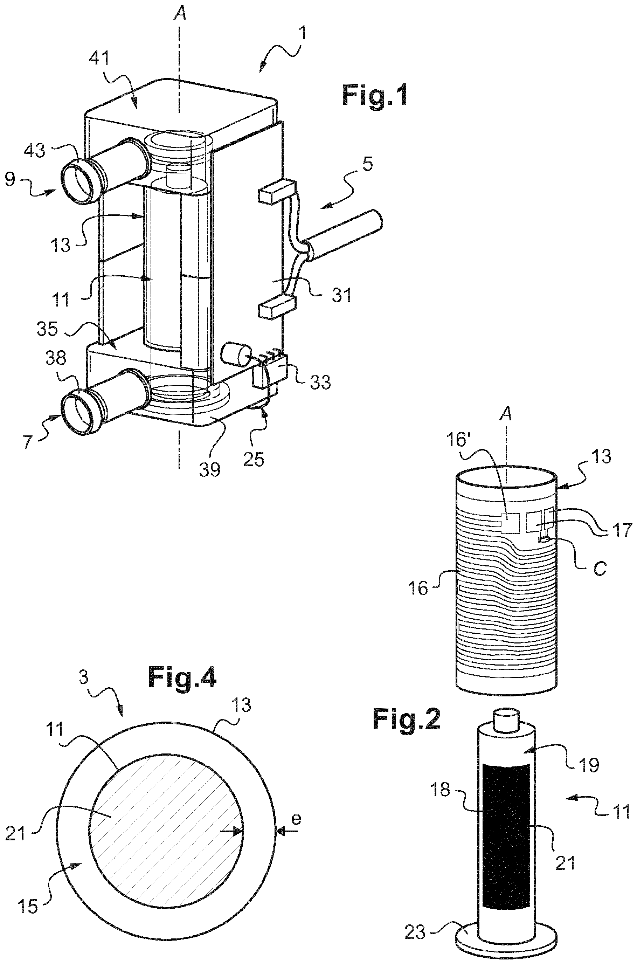

La figure 1 représente un premier mode de réalisation d'un dispositif de conditionnement thermique 1 d'un fluide, tel qu'un dispositif de chauffage électrique de fluide pour véhicule automobile pour un appareil de chauffage et/ou climatisation.

Le dispositif de conditionnement thermique 1 est par exemple un dispositif de chauffage additionnel permettant de chauffer un fluide agencé dans un circuit de chauffage d'un fluide du véhicule pour le chauffage de l'habitacle.

Selon un exemple, le dispositif de conditionnement thermique 1 est disposé en amont d'un échangeur thermique d'une boucle de climatisation apte à fonctionner en pompe à chaleur, de façon à chauffer le fluide réfrigérant.

Selon encore un autre exemple, le dispositif de conditionnement thermique 1 est agencé en amont d'un échangeur thermique utilisant le fluide de refroidissement d'un moteur thermique comme fluide caloporteur.

On pourrait aussi prévoir un tel dispositif de conditionnement thermique 1 en amont d'un échangeur thermique destiné à la régulation thermique d'un dispositif de stockage de l'énergie électrique, parfois qualifié d'ensemble de batteries, ou encore d'une pile à combustible, pour un véhicule à propulsion électrique ou hybride.

Le dispositif de conditionnement thermique 1 comprend un module thermique 3.

Afin de contrôler l'alimentation électrique du module thermique 3, le dispositif de conditionnement thermique 1 comprend en outre au moins un moyen de commande 5.

Le dispositif de conditionnement thermique 1 représenté comprend en outre une entrée de fluide 7, et une sortie de fluide 9.

En référence à la figure 2, le module thermique 3 comprend un noyau 11 et une enceinte 13 entourant le noyau 11. Le noyau 11 est donc agencé à l'intérieur de l'enceinte 13, on parle également de noyau central 11.

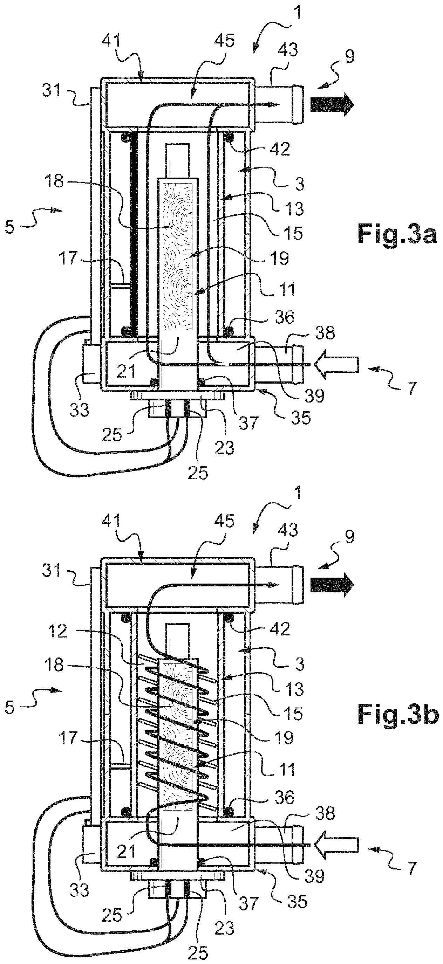

Comme cela est mieux visible sur les figures 3a et 4, le noyau central 11 et l'enceinte 13 définissent un espace de circulation 15 du fluide, par exemple à chauffer, entre le noyau central 11 et l'enceinte 13. Ainsi, la surface externe du noyau central 11 et la surface interne de l'enceinte 13 définissent un volume de circulation du fluide, dans cet exemple du fluide à chauffer.

En se référant de nouveau aux figures 1 et 2, l'enceinte 13 est par exemple réalisée de forme sensiblement cylindrique, ou en alternative de forme sensiblement parallélépipédique, en s'étendant selon un axe longitudinal *A*. L'enceinte 13 du module thermique 3 présente deux extrémités opposées : une première extrémité agencée du côté de l'entrée de fluide 7 et une deuxième extrémité opposée agencée du côté de la sortie de fluide 9.

Le module de conditionnement thermique 3 présente donc une forme générale définie par l'enceinte 13 qui peut être sensiblement cylindrique ou encore sensiblement parallélépipédique, en s'étendant selon l'axe longitudinal *A*.

L'enceinte 13 est apte à être commandée par le moyen de commande 5 de manière à chauffer le fluide par échange de chaleur entre l'enceinte 13 et le fluide circulant dans l'espace de circulation 15.

À cet effet, l'enceinte 13, présente au moins un premier moyen électrique 16 de chauffe tel qu'une résistance chauffante, réalisée de façon schématique sur la figure 2. Cette résistance chauffante est réalisée sous la forme d'une piste résistive. La piste résistive est par exemple réalisée par sérigraphie sur la surface externe de l'enceinte 13, c'est-à-dire sur la surface opposée à la surface interne de l'enceinte 13 en regard du noyau central 11. La ou les pistes résistives formant les premiers moyens électriques 16 de chauffe sont donc hors de l'espace de circulation 15 du fluide à chauffer.

Grâce à ce mode de réalisation la chaleur produite par la résistance est transmise au fluide à chauffer à travers la paroi de l'enceinte 13.

En référence à la figure 3a, l'enceinte 13 comporte à cet effet deux terminaux 17 pour relier le premier moyen électrique 16 de chauffe à des potentiels électriques, via le moyen de commande 5. Les terminaux 17 permettent donc d'amener le courant électrique au premier moyen électrique 16 de chauffe.

Les terminaux 17 peuvent être réalisés sous la forme de languettes flexibles aptes à être clipsées par exemple sur le moyen de commande 5, ou encore de fils de connexion aptes à être soudés par exemple sur le moyen de commande 5.

À cet effet, l'enceinte 13 présente selon l'exemple de la figure 2 des bornes 16' de connexion électriquement reliées aux extrémités des pistes résistives 16. Le moyen de commande 5 est connecté électriquement à ces bornes de connexion 16' via les terminaux 17.

En outre, on peut prévoir un capteur de température *C* pour mesurer la température de l'enceinte 13. Il peut s'agir d'une thermistance, telle qu'une sonde « CTN » pour Coefficient de Température Négatif ou « NTC » pour l'anglais « Negative Temperature Coefficient », dont la résistance diminue de façon uniforme avec la température. Ce capteur de température *C* peut être brasé ou soudé sur la surface externe de l'enceinte 13.

Dans ce cas, le moyen de commande 5 contrôle l'alimentation des résistances chauffantes en fonction d'une consigne de chauffage et de la température mesurée par le capteur de température.

En se référant aux figures 2 et 3, le noyau central 11 peut quant à lui être réalisé de forme sensiblement cylindrique en s'étendant selon l'axe longitudinal *A*.

Le noyau central 11 et l'enceinte 13 peuvent être concentriques comme schématisé sur la figure 4.

Le noyau central 11 du module thermique 3 présente deux extrémités longitudinalement opposées : une première extrémité agencée du côté de l'entrée de fluide et une deuxième extrémité opposée agencée du côté de la sortie de fluide.

Le dispositif de conditionnement thermique 1 comprend en outre un second moyen électrique 18 de chauffe porté par le noyau central 11. Le noyau central 11 forme alors également un corps chauffant ou barreau chauffant en plus de l'enceinte 13 chauffante.

L'espace de circulation 15 est donc défini autour du ou des seconds moyens électriques 18 de chauffe du noyau central 11. Ainsi, le chauffage se fait également par immersion du second moyen électrique 18 de chauffe dans le fluide à chauffer circulant dans l'espace de circulation 15. Grâce à ce mode de réalisation la chaleur produite par le second moyen électrique 18 de chauffe est directement transmise au fluide à chauffer. Le fluide peut être chauffé rapidement.

Le second moyen électrique 18 de chauffe est apte à être commandé par un moyen de commande 5 pour chauffer le fluide circulant dans l'espace de circulation 15 par échange thermique entre le noyau central 11 et le fluide dans lequel le noyau central 11 est immergé.

Il s'agit par exemple d'un moyen de commande 5 commun pour le second moyen électrique 18 de chauffe porté par le noyau central 11 et pour le premier moyen électrique 16 de chauffe porté par l'enceinte 13. Ainsi, l'enceinte 13 et le noyau central 11 peuvent être commandés par un même moyen de commande 5.

De plus, selon le premier mode de réalisation, la surface externe du noyau central 11 peut être sans rainure, de manière à définir un espace de circulation axial parallèlement à l'axe longitudinal *A*. En effet, il n'est pas nécessaire de prévoir une circulation par exemple hélicoïdale du fluide pour améliorer le transfert thermique car l'immersion du noyau central 11 formant aussi un corps chauffant dans le volume de fluide à chauffer permet d'améliorer le rendement.

Bien entendu, on peut prévoir selon un deuxième mode de réalisation illustré sur la figure 3b, que le noyau central 11 comprend sur sa surface externe au moins une rainure 12.

Selon l'exemple illustré sur la figure 3b, la rainure 12 peut être sensiblement hélicoïdale. Dans ce cas, l'espace de circulation 15 définit un trajet sensiblement hélicoïdal pour le fluide. Ceci permet d'améliorer encore le transfert.

En outre, le noyau central 11 présente par exemple un support 19 du second moyen électrique 18 de chauffe.

Le support 19 a donc pour fonction de permettre l'agencement du second moyen électrique 18 de chauffe dans le dispositif 1 de conditionnement thermique, par exemple de chauffage tel que décrit.

Le support 19 est réalisé dans un matériau isolant électrique et conducteur thermique.

Le support 19 peut présenter un corps 21 et une base ou siège 23 à une extrémité du corps 21, plus précisément au niveau de la première extrémité du noyau central 11.

Le corps 21 peut être de forme sensiblement cylindrique et la base 23 par exemple de forme sensiblement circulaire. Le corps 21 est par exemple un corps plein, tel qu'un cylindre plein.

Le second moyen électrique 18 de chauffe présente au moins une piste résistive électrique réalisée sur le support 19, plus précisément sur le corps 21 du support 19.

En outre, le noyau central 11 présente un film protecteur (non visible sur les figures) disposé sur la piste résistive électrique. Il s'agit par exemple d'un film flexible enroulé autour du support 19 de manière à protéger la ou les pistes résistives. Ce film protecteur est réalisé dans un matériau conducteur thermique et isolant électrique. Avantageusement il s'agit du même matériau que le matériau du support 19, par exemple en céramique.

Le support 19 et le film protecteur ont pour fonction supplémentaire de contribuer au transfert thermique entre le second moyen électrique 18 de chauffe et le fluide autour du noyau central 11.

L'ensemble formant le noyau 11a ou 11b, à savoir le support 19 et le film protecteur disposé sur les pistes résistives, peut être solidarisé par passage au four.

Le noyau central 11 comporte en outre deux terminaux 25 pour relier le second moyen électrique 18 de chauffe à des potentiels électriques, via le moyen de commande 5. Les terminaux 25 permettent donc d'amener le courant électrique au second moyen électrique 18 de chauffe.

Les terminaux 25 peuvent être réalisés sous la forme de languettes flexibles aptes à être clipsées par exemple sur le moyen de commande 5, ou encore de fils de connexion aptes à être soudés par exemple sur le moyen de commande 5.

Les terminaux 25 peuvent être par exemple surmoulés dans le matériau par exemple en céramique du support 19. Ceci simplifie le câblage. Le support 19 assure alors une fonction d'interconnexion entre le second moyen électrique 18 et le moyen de commande 5 via les terminaux 25.

Ainsi, le noyau central 11 assure à la fois une fonction mécanique de support du second moyen électrique 18 de chauffe, de support et de protection des terminaux permettant la connexion entre le second moyen électrique 18 de chauffe et le moyen de commande 5, d'isolation électrique du second moyen électrique 18 de chauffe vis-à-vis de l'espace de circulation 15 du fluide, et de conductivité thermique de la chaleur du second moyen électrique 18 de chauffe vers le fluide.

En outre, l'enceinte 13 recevant le noyau central 11 est agencée autour du corps 21 du noyau central 11 avec une distance *e* schématisée sur la figure 4. Il s'agit d'une distance *e* latérale par rapport à l'axe longitudinal *A* dans l'exemple illustré.

Cette distance *e* forme un écart entre la surface externe du corps 21 du noyau central 11 et la surface interne de l'enceinte 13 permettant de définir le volume de l'espace de circulation15 et donc délimite un espace de circulation du fluide.

La distance *e* peut être constante sur toute la longueur de l'enceinte 13 dans l'exemple illustré, de sorte que le volume de l'espace de circulation 15 est constant. Alternativement, la distance *e* peut être évolutive de sorte que la vitesse d'écoulement est modifiée le long de l'espace de circulation 15.

De plus, cette distance *e* peut être adaptée, par exemple en modifiant le diamètre du noyau central 11, de manière à améliorer les performances thermiques. En effet, avec un espace de circulation 15 du fluide étroit, la vitesse de passage du fluide augmente, et la vitesse augmentant, les pertes de charge augmentent en conséquence. Et au contraire, avec un espace de circulation du fluide à chauffer trop grand, les pertes de charge baissent mais l'échange thermique entre le fluide et l'enveloppe n'est pas performant.

La plage de distance *e* entre le corps 21 du noyau central 11 et l'enceinte 13 est choisie de manière à définir un volume de l'espace de circulation 15 qui offre un échange thermique satisfaisant tout en minimisant les pertes de charge. Le volume de l'espace de circulation 15 ainsi défini est suffisamment petit pour que le fluide passe suffisamment vite et absorbe de la chaleur et suffisamment grand pour que les pertes de charge diminuent.

Selon le mode de réalisation illustré sur les figures 1, 3a et 3b, le moyen de commande 5 est quant à lui agencé à titre d'exemple sur un côté du dispositif de conditionnement thermique 1.

Comme dit précédemment, le moyen de commande 5 peut être commun pour les deux moyens électriques de chauffe 16 et 18 portés d'une part par le noyau central 11 et d'autre part par l'enceinte 13.

Le moyen de commande 5 peut comporter au moins un support de circuit électrique tel qu'une carte à circuit imprimé 31, PCB en anglais pour "Printed circuit board". Le moyen de commande 5 comporte notamment des composants électroniques et/ou électriques portés par le support de circuit électrique 31. Ces composants électroniques et/ou électriques peuvent par exemple comporter un microcontrôleur et des contacts électriques connectés au premier moyen électrique 16 de chauffe prévu sur l'enceinte 13 ou au second moyen électrique 18 de chauffe prévu sur le noyau central 11. Le moyen de commande 5 peut encore comporter au moins un commutateur de puissance 33.

Comme dit précédemment, le dispositif de conditionnement thermique 1 comporte en outre au moins une entrée de fluide 7 pour l'admission du fluide et au moins une sortie 9 de fluide pour l'évacuation du fluide.

Selon l'exemple illustré, l'entrée de fluide 7 peut comprendre un boîtier d'entrée de fluide 35.

Selon l'exemple illustré sur la figure 3a ou 3b, le commutateur de puissance 33 peut être agencé à proximité du boîtier d'entrée de fluide 35, en étant en contact thermique avec le boîtier d'entrée de fluide 35 permettant ainsi un refroidissement du commutateur de puissance 33, par échange thermique avec le fluide entrant dans le dispositif 1.

Le boîtier d'entrée de fluide 35 est fixé à l'enceinte 13. Un moyen d'étanchéité 36 peut être disposé entre le boîtier d'entrée de fluide 35 et l'enceinte 13 (cf figure 3a ou 3b). Le moyen d'étanchéité 36 est par exemple agencé au niveau d'une extrémité longitudinale de l'enceinte 13.

De plus, le noyau central 11 peut être assemblé par sa base 23 au boîtier d'entrée de fluide 35. Un moyen d'étanchéité 37 peut être agencé entre la base 23 du noyau central 11 et le boîtier d'entrée de fluide 35.

On prévoit en outre une tubulure d'entrée 38 de fluide dans le boîtier d'entrée de fluide 35. La tubulure d'entrée 38 est par exemple agencée en saillie par rapport au boîtier d'entrée de fluide 35. La tubulure d'entrée 38 s'étend selon l'exemple illustré sensiblement radialement par rapport à l'axe longitudinal *A* du module thermique 3.

Selon l'exemple illustré, le boîtier d'entrée de fluide 35 présente un canal d'entrée de fluide 39 en communication fluidique avec la tubulure d'entrée 38 et avec l'espace de circulation 15 du module thermique 3. Ceci permet la circulation du fluide depuis la tubulure d'entrée 38 vers l'espace de circulation 15 comme schématisé par les flèches sur la figure 3a ou 3b.

De même, pour la sortie de fluide 9 on peut prévoir un boîtier de sortie de fluide 41.

Ce boîtier de sortie de fluide 41 est fixé à l'enceinte 13. Selon le mode de réalisation illustré sur les figures 1, 3a et 3b, le boîtier de sortie de fluide 41 est agencé de façon opposée par rapport au boîtier d'entrée de fluide 35.

Un moyen d'étanchéité 42 est avantageusement prévu entre l'enceinte 13 et le boîtier de sortie de fluide 41.

Le boîtier de sortie de fluide 41 comporte une tubulure de sortie de fluide 43. La tubulure de sortie 43 est par exemple agencée en saillie par rapport au boîtier de sortie de fluide 41. Plus précisément, la tubulure de sortie 43 s'étend selon l'exemple illustré sensiblement perpendiculairement par rapport à l'axe longitudinal *A* du module thermique 3.

Bien entendu, d'autres agencements sont envisageables. À titre d'exemples, le boîtier de sortie de fluide 41 et le boîtier d'entrée de fluide 35, peuvent être agencés du même côté du module thermique 3, ou encore les tubulures d'entrée et de sortie 38 et 43 peuvent être agencées sur un même côté ou sur deux côtés opposés, ou encore la tubulure de sortie 43 par exemple peut s'étendre selon une direction sensiblement parallèle à l'axe longitudinal *A*.

Selon l'exemple illustré, le boîtier de sortie de fluide 41 présente un canal de sortie de fluide 45 en communication fluidique avec l'espace de circulation 15 du module thermique 3 ainsi qu'avec la tubulure de sortie de fluide 43.

Ainsi, le fluide provenant du boîtier d'entrée de fluide 35 peut circuler dans le canal d'entrée de fluide 39 puis dans l'espace de circulation 15 du module thermique 3, avant d'être évacué en circulant dans le canal de sortie de fluide 45 puis par la tubulure de sortie 43.

Un dispositif de conditionnement thermique 1 ainsi réalisé permet de limiter la perte de charge en présentant un encombrement réduit par rapport à certaines solutions de l'art antérieur, tout en augmentant le transfert des calories.

En effet, le noyau central 11 selon le premier ou le deuxième mode de réalisation forme selon l'invention également un corps chauffant ou barreau chauffant en plus de l'enceinte chauffante 13 dans laquelle est agencé le noyau central 11.

La chaleur produite par le second moyen électrique 18 de chauffe réalisé sous forme de pistes résistives est directement transmise au fluide dans lequel le noyau central 11 est immergé. En outre, la chaleur produite par le premier moyen électrique 16 de chauffe est également transmise au fluide à travers la paroi de l'enceinte 13. On cumule ainsi le transfert thermique entre le premier moyen électrique 16 de chauffe porté par l'enceinte 13 et le fluide à l'intérieur de l'enceinte 13 autour du noyau central 11, et le transfert thermique entre le second moyen électrique 18 de chauffe porté par le noyau central 11 et le fluide autour du noyau central 11.

Bien entendu, le premier moyen électrique 16 et le second moyen électrique 18 de chauffe peuvent participer ensemble mais également individuellement à la chauffe du fluide à chauffer.

Ainsi, avec un seul module thermique 3 comprenant une seule enceinte chauffante 13 et un seul noyau chauffant 11, on peut obtenir une puissance de chauffage similaire à la puissance obtenue dans les solutions de l'art antérieur prévoyant deux modules thermiques, avec une structure compacte.

## Revendications

1. Dispositif (1) électrique de conditionnement thermique d'un fluide pour véhicule automobile, ledit dispositif (1) comprenant au moins un module thermique (3) comprenant :
• une enceinte (13) comprenant au moins un premier moyen électrique (16) de chauffe, et
• un noyau (11) agencé à l'intérieur de l'enceinte (13), de manière à définir un espace de circulation (15) du fluide entre le noyau (11) et l'enceinte (13), tel que le noyau (11) d'un module thermique (3) comprend au moins un second moyen électrique (18) de chauffe du fluide, le premier moyen électrique (16) est réalisé sous forme de pistes résistives sur une surface externe de l'enceinte (13) hors de l'espace de circulation (15) et le second moyen électrique (18) de chauffe comprend au moins une piste résistive, et dans lequel le noyau (11) comporte un film protecteur disposé sur la piste résistive, et réalisé dans un matériau isolant électrique et conducteur thermique, tel qu'un matériau céramique, les deux moyens électriques (16, 18) pouvant participer ensemble ou individuellement à la chauffe du fluide à chauffer.

2. Dispositif selon la revendication 1, dans lequel le noyau (11) comporte un support (19) du second moyen électrique (18) de chauffe réalisé dans un matériau isolant électriquement et conducteur thermique, tel qu'un matériau céramique.

3. Dispositif selon la revendication 2, dans lequel le film protecteur est réalisé dans le même matériau que le support (19) du second moyen électrique (18) de chauffe.

4. Dispositif selon l'une quelconque des revendications précédentes, dans lequel l'enceinte (13) portant le premier moyen électrique (16) de chauffe et le noyau (11) portant le second moyen électrique (18) de chauffe sont aptes à être commandés par un moyen de commande (5) commun.

5. Dispositif selon l'une quelconque des revendications 2 à 3, dans lequel le noyau (11) présente deux terminaux (25) aptes à être connectés à un moyen de commande (5) associé, et surmoulés dans le matériau du support (19) du noyau (11) correspondant.

6. Dispositif selon l'une quelconque des revendications précédentes, comportant au moins un boîtier d'entrée (35) du fluide et au moins un boîtier de sortie (41) du fluide respectivement en communication fluidique avec l'espace de circulation (15) du fluide, et agencées de façon opposée de part et d'autre du dispositif (1) selon un axe longitudinal (*A*).

7. Dispositif selon l'une quelconque des revendications précédentes, dans lequel le noyau (11) comprend sur sa surface externe au moins une rainure (12).

8. Appareil de chauffage et/ou climatisation pour véhicule automobile, **caractérisé en ce qu'**il comprend au moins un dispositif (1) de conditionnement thermique d'un fluide selon l'une quelconque des revendications précédentes.

## Patentansprüche

1. Elektrische Vorrichtung (1) zur thermischen Aufbereitung eines Fluids für ein Kraftfahrzeug, wobei die Vorrichtung (1) mindestens ein thermisches Modul (3) enthält, das enthält:
• einen Behälter (13), der mindestens eine erste elektrische Heizeinrichtung (16) enthält, und
• einen innerhalb des Behälters (13) angeordneten Kern (11), um einen Zirkulationsraum (15) des Fluids zwischen dem Kern (11) und dem Behälter (13) zu definieren, derart, dass der Kern (11) eines thermischen Moduls (3) mindestens eine zweite elektrische Heizeinrichtung (18) des Fluids enthält, wobei die erste elektrische Einrichtung (16) in Form von Widerstandsbahnen auf einer Außenfläche des Behälters (13) außerhalb des Zirkulationsraums (15) hergestellt wird und die zweite elektrische Heizeinrichtung (18) mindestens eine Widerstandsbahn aufweist, und wobei der Kern (11) eine Schutzfolie aufweist, die auf der Widerstandsbahn angeordnet und aus einem elektrisch isolierenden und Wärme leitenden Material wie einem Keramikmaterial hergestellt ist, wobei die zwei elektrischen Einrichtungen (16, 18) zusammen oder einzeln beim Erwärmen des zu erwärmenden Fluids mitwirken können.

2. Vorrichtung nach Anspruch 1, wobei der Kern (11) einen Träger (19) der zweiten elektrischen Heizeinrichtung (18) aufweist, der aus einem elektrisch isolierenden und Wärme leitenden Material wie einem Keramikmaterial hergestellt ist.

3. Vorrichtung nach Anspruch 2, wobei die Schutzfolie aus dem gleichen Material wie der Träger (19) der zweiten elektrischen Heizeinrichtung (18) hergestellt ist.

4. Vorrichtung nach einem der vorhergehenden Ansprüche, wobei der die erste elektrische Heizeinrichtung (16) tragende Behälter (13) und der die zweite elektrische Heizeinrichtung (18) tragende Kern (11) von einer gemeinsamen Steuereinrichtung (5) gesteuert werden können.

5. Vorrichtung nach einem der Ansprüche 2 bis 3, wobei der Kern (11) zwei Anschlüsse (25) aufweist, die mit einer zugeordneten Steuereinrichtung (5) verbunden sein können und in das Material des Trägers (19) des entsprechenden Kerns (11) aufgeformt sind.

6. Vorrichtung nach einem der vorhergehenden Ansprüche, die mindestens einen Eingangskasten (35) des Fluids und mindestens einen Ausgangskasten (41) des Fluids je in Fluidverbindung mit dem Zirkulationsraum (15) des Fluids und entgegengesetzt zu beiden Seiten der Vorrichtung (1) gemäß einer Längsachse (A) angeordnet aufweist.

7. Vorrichtung nach einem der vorhergehenden Ansprüche, wobei der Kern (11) auf seiner Außenfläche mindestens eine Rille (12) enthält.

8. Heiz- und/oder Klimatisierungsgerät für ein Kraftfahrzeug, **dadurch gekennzeichnet, dass** es mindestens eine Vorrichtung (1) zur thermischen Aufbereitung eines Fluids nach einem der vorhergehenden Ansprüche enthält.

## Claims

1. Electric device (1) for thermally conditioning a fluid for a motor vehicle, said device (1) comprising at least one thermal module (3) comprising:
- an enclosure (13) comprising at least one electric heating means (16), and
- a core (11) arranged inside the enclosure (13), so as to define a circulation space (15) for the fluid between the core (11) and the enclosure (13),
such that the core (11) of a thermal module (3) comprises at least one second electric means (18) for heating the fluid, the first electric means (16) is implemented in the form of resistive tracks on an external surface of the enclosure (13) outside the circulation space (15) and the second electric heating means (18) comprises at least one resistive track and wherein the core (11) comprises a protective film arranged on the resistive track and made of an electrically insulating and heat-conducting material, such as a ceramic material, the two electric means (16, 18) being able to participate together or individually in heating the fluid to be heated.

2. Device according to Claim 1, wherein the core (11) comprises a support (19) for the second electric heating means (18) made of an electrically insulating and heat-conducting material, such as a ceramic material.

3. Device according to Claim 2, wherein the protective film is made of the same material as the support (19) for the second electric heating means (18).

4. Device according to any one of the preceding claims, wherein the enclosure (13) bearing the first electric heating means (16) and the core (11) bearing the second electric heating means (18) are able to be controlled by a common control means (5).

5. Device according to either one of Claims 2 and 3, wherein the core (11) has two terminals (25) able to be connected to an associated control means (5), and overmolded in the material of the support (19) for the corresponding core (11).

6. Device according to any one of the preceding claims, comprising at least one fluid inlet housing (35) and at least one fluid outlet housing (41) respectively in fluid communication with the circulation space (15) for the fluid, and arranged in an opposed manner on either side of the device (1) along a longitudinal axis *A*.

7. Device according to any one of the preceding claims, wherein the core (11) comprises on its external surface at least one groove (12).

8. Heating and/or air-conditioning facility for a motor vehicle, **characterized in that** it comprises at least one device (1) for thermally conditioning a fluid according to any one of the preceding claims.
